# EUROPÄISCHE PATENTSCHRIFT

(11) **EP 1 344 757 B1**
(45) Veröffentlichungstag und Bekanntmachung des Hinweises auf die Patenterteilung: **13.01.2010**
(21) Anmeldenummer: 03003711.3
(22) Anmeldetag: 19.02.2003
(51) Int. Cl.: C04B 28/02, C04B 28/18

(54) **Biologischer Baustoff**
Biological building material
Matériau de construction biologique

(30) Priorität: 16.03.2002 DE 10211856
(43) Veröffentlichungstag der Anmeldung: 17.09.2003
(73) Patentinhaber: Kettner, Bernhard, 56743 Mending (DE)
(72) Erfinder: Kettner, Bernhard, 56743 Mending (DE)
(74) Vertreter: Lemcke, Brommer & Partner

(56) Entgegenhaltungen:
- AT-B- 378 173
- DE-A1- 3 147 855
- DE-C- 102 372
- GB-A- 1 345 583
- DATABASE WPI Section Ch, Week 200264 Derwent Publications Ltd., London, GB; Class L02, AN 2002-593483 XP002362139 & JP 2002 128560 A (YABASHI KOGYO KK) 9. Mai 2002 (2002-05-09)
- SCHIELE, EBERHART: "Kalk, Herstellung - Eigenschaften - Verwendung" 1972, VERLAG STAHLEISEN M.B.H. , DÜSSELDORF , XP008056875 * Seiten 403-405 *

## Beschreibung

Die Erfindung betrifft einen Baustoff mit den Merkmalen des Oberbegriffes von Patentanspruch 1 und ein Verfahren zu dessen Herstellung mit den Merkmalen des Oberbegriffes von Patentanspruch 11.

Die Herstellung von Baustoffen unter Verwendung von Kalk, Sand und Wasser ist von alters her bekannt. Heutzutage werden solche Kalk-Sand-Mischungen in Reaktoren aufbereitet, was einen hohen Energiebedarf erfordert.

Auch die Sandgewinnung wird zumindest in Ballungsgebieten zunehmend problematisch.

Durch die DE 102 372 ist es bekannt geworden, Bausteine aus Seeschlick herzustellen. Dabei wird der Seeschlick mit einem Zusatz von etwa 5% Kalkhydrat versehen, anschließend getrocknet und nach erfolgtem Auslaugen mit Wasser bei 100 °C Wärme nochmals getrocknet. Demgemäß ist auch hier ein hoher Energiebedarf notwendig.

Der vorliegenden Erfindung liegt die Aufgabe zugrunde, einen neuen Weg zur Baustoffgewinnung anzugeben, der wesentlich umweltschonender ist. Dabei soll sich der Baustoff durch hohe Druckfestigkeit und Lebensdauer sowie im übrigen durch befriedigende bauphysikalische Kennwerte auszeichnet.

Diese Aufgabe wird hinsichtlich des Herstellungsverfahrens erfindungsgemäß durch die Merkmale des Patentanspruchs 1 gelöst.

Der Anmelder hat überraschend festgestellt, dass es nicht notwendig ist, wie bisher reinen Sand zuzugeben, sondern dass man statt dessen durchaus mit sandhaltiger Erde arbeiten kann. Erfindungsgemäß wird also auf die bisher notwendigen Aufbereitungsverfahren für die Sandgewinnung verzichtet und statt dessen direkt Mutterboden verwendet, der lediglich einen gewissen Sandanteil aufzuweisen hat, vorzugsweise 60 % bis 80 % Sand bezogen auf die jeweiligen Trockenmassen. Dadurch entfallen neben den Sandaufbereitungsverfahren auch erhebliche Transportkosten, so dass das erfindungsgemäße Verfahren wesentlich umweltfreundlicher und kostengünstiger ist.

Des weiteren bietet sich der Vorteil, dass die Trocknung auf natürliche Weise im Freien erfolgen kann. Dadurch kann auf die bisher notwendigen energieaufwendigen Reaktoren verzichtet werden.

Die zum Einsatz kommende sandhaltige Erde sollte in staubtrockener Form vorliegen, damit der Wasseranteil genau erfasst werden kann. Es liegt aber auch im Rahmen der Erfindung, mit feuchter sandhaltiger Erde zu arbeiten und die Wasserzugabe entsprechend der im Erdanteil bereits enthaltenen Feuchtigkeit zu reduzieren.

Grundsätzlich sollte der Erdanteil höher gewählt werden als der Kalkanteil, und zwar auch dann, wenn mit nahezu wasserfreier Erde gearbeitet wird.

Hinsichtlich des Verhältnisses von gelöschtem Kalk zu trockener Erde haben sich Werte von etwa 1:1 bis etwa 1:3,5, insbesondere von 1:1,5 bis etwa 1:2,5 als zweckmäßig erwiesen.

Hinsichtlich des Verhältnisses von trockener Erde zu Wasser ist ein Mischungsverhältnis von etwa 20:1 bis etwa 2:1, insbesondere von etwa 10:1 bis etwa 3:1 anzustreben. Es liegt dabei aber durchaus im Rahmen der Erfindung, auf eine separate Wasserzugabe zu verzichten, wenn der Erdanteil bereits genügende Feuchtigkeit aufweist.

Für die Herstellung des gelöschten Kalkes empfiehlt es sich, Stückkalk mit Wasser im Verhältnis etwa 1:2 bis etwa 1:4 zu mischen und mindestens 12 h reagieren zu lassen, vorzugsweise einige Tage, da der Kalk mit längerer Standzeit fetter wird.

Hinsichtlich der Zusammensetzung des Baustoffes wird die der vorliegenden Erfindung zugrundeliegende Aufgabe durch die Merkmale des Patentanspruches 11 gelöst. Dabei können gegebenenfalls weitere Zuschlagstoffe eingesetzt werden, soweit dadurch nicht die Umweltverträglichkeit beeinträchtigt wird.

Auch liegt es im Rahmen der Erfindung, den beschriebenen Baustoff, wenn er in Form von Platten oder langen Trägern hergestellt werden soll, in an sich bekannter Weise mit innenliegenden Bewehrungsstäben zu verstärken.

Selbstverständlich können auch Pflastersteine und andere Bodenbeläge aus dem erfindungsgemäßen Baustoff hergestellt werden.

Weitere Merkmale und Vorteile der Erfindung ergeben sich aus der nachfolgenden Beschreibung zweier Ausführungsbeispiele:

### Erstes Beispiel

25 kg Stückkalk wurden mit 75 I Wasser gelöscht. Die Mischung wurde eine Woche stehengelassen. Danach wurde der gelöschte Kalk mit der doppelten Menge trockenen, sandhaltigen Mutterbodens (mit unbedeutendem Steinanteil) und der halben Menge Wasser vermischt, in Steinformen eingebracht und 2 Wochen an der Luft ohne künstliche Beheizung getrocknet. Die so hergestellten Mauersteine hatten eine größere Härte als Ziegelsteine.

### Zweites Beispiel

Der wie in Beispiel 1 hergestellte gelöschte Kalk wurde nur mit der gleichen Menge sandhaltigen Mutterbodens vermischt und 2 Wochen getrocknet. Obwohl dabei auf separate Wasserzugabe verzichtet worden ist, entstand ein hinreichend gut abgebundener Baustoff.

Zusammenfassend zeichnet sich die Erfindung also dadurch aus, daß man auf natürlichem Weg einen biologisch einwandfreien Baustoff erhält. Auf die Zugabe von Chemikalien, Stabilisierungsmitteln, Gesteinsmehl und dergleichen kann verzichtet werden.

## Patentansprüche

1. Verfahren zur Herstellung eines biologischen Baustoffes für Mauersteine, Wand- oder Deckenplatten, Stürze, Putz, Mörtel und dergleichen unter Verwendung von Kalk und Sand, wobei gelöschter Kalk mit sandhaltiger Erde vermischt wird, danach in die gewünschte Form gebracht und getrocknet wird,
**dadurch gekennzeichnet,**
**dass** als sandhaltige Erde Mutterboden verwendet wird und dass zur Vermischung das Verhältnis von gelöschtem Kalk zu staubtrockener Erde bei etwa 1:1 bis etwa 1:3,5, insbesondere bis etwa 1:2,5 gewählt wird.

2. Verfahren nach Anspruch 1,
**dadurch gekennzeichnet,**
**dass** die Trocknung auf natürliche Weise im Freien erfolgt.

3. Verfahren nach Anspruch 1,
**dadurch gekennzeichnet,**
**dass** die Trocknung mindestens 10 Tage, vorzugsweise einige Wochen dauert.

4. Verfahren nach Anspruch 1,
**dadurch gekennzeichnet,**
**dass** die sandhaltige Erde in staubtrockener Form zugegeben wird.

5. Verfahren nach Anspruch 1,
**dadurch gekennzeichnet,**
**dass** die sandhaltige Erde zumindest 50 % Sand, maximal 85 % Sand jeweils bezogen auf den Trockenzustand enthält.

6. Verfahren nach Anspruch 1,
**dadurch gekennzeichnet,**
**dass** die Vermischung des gelöschten Kalkes mit Erde unter Wasserzugabe erfolgt.

7. Verfahren nach Anspruch 1,
**dadurch gekennzeichnet,**
**dass** der Erdanteil höher gewählt wird als der Anteil an gelöschtem Kalk.

8. Verfahren nach Anspruch 1,
**dadurch gekennzeichnet,**
**dass** das Verhältnis von staubtrockener Erde zu Wasser bei etwa 20:1 bis etwa 2:1, insbesondere bei etwa 10:1 bis etwa 3:1 gewählt wird.

9. Verfahren nach Anspruch 1,
**dadurch gekennzeichnet,**
**dass** der gelöschte Kalk aus Stückkalk und Wasser im Verhältnis etwa 1:2 bis etwa 1:4 hergestellt wird.

10. Verfahren nach Anspruch 1,
**dadurch gekennzeichnet,**
**dass** die Kalklöschung über mindestens 12 h, insbesondere mindestens 24 h, vorzugsweise einige Tage dauert.

11. Biologischer Baustoff für Mauersteine, Wand- oder Deckenplatten, Stürze, Putz, Mörtel und dergleichen, bestehend aus einer Mischung von gelöschtem Kalk mit sandhaltiger Erde und gegebenenfalls mit Wasser,
**dadurch gekennzeichnet,**
**dass** die sandhaltige Erde aus Mutterboden besteht und dass zur Vermischung ein Verhältnis von gelöschtem Kalk zu staubtrockener Erde bei etwa 1:1 bis 1:3,5, insbesondere bis etwa 1:2,5 besteht.

## Claims

1. Method of producing a biological building material for bricks, wall or ceiling panels, lintels, stucco, mortar and the like, using lime and sand, wherein slaked lime is mixed with sand-containing soil, then brought into the desired form and dried,
**characterised in that**
topsoil is used as the sand-containing soil and, for mixing, the ratio of slaked lime to bone-dry soil is selected to be from about 1 : 1 to about 1 : 3.5, especially up to about 1 : 2.5.

2. Method according to claim 1,
**characterised in that**
the drying takes place naturally in the open air.

3. Method according to claim 1,
**characterised in that**
the drying lasts at least 10 days, preferably a few weeks.

4. Method according to claim 1,
**characterised in that**
the sand-containing soil is added in bone-dry form.

5. Method according to claim 1,
**characterised in that**
the sand-containing soil contains at least 50 % sand and at most 85 % sand, in each case based on the dry state.

6. Method according to claim 1,
**characterised in that**
the mixing of the slaked lime with soil is effected with the addition of water.

7. Method according to claim 1,
**characterised in that**
the proportion of soil is selected to be higher than the proportion of slaked lime.

8. Method according to claim 1,
**characterised in that**
the ratio of bone-dry soil to water is selected to be from about 20 : 1 to about 2 : 1, especially from about 10 : 1 to about 3 : 1.

9. Method according to claim 1,
**characterised in that**
the slaked lime is produced from lump lime and water in a ratio of from about 1 : 2 to about 1 : 4.

10. Method according to claim 1,
**characterised in that**
the lime slaking lasts at least 12 hours, especially at least 24 hours, preferably a few days.

11. Biological building material for bricks, wall or ceiling panels, lintels, stucco, mortar and the like, consisting of a mixture of slaked lime with sand-containing soil and optionally with water,
**characterised in that**
the sand-containing soil consists of topsoil and, for mixing, the ratio of slaked lime to bone-dry soil is from about 1 : 1 to about 1 : 3.5, especially up to about 1 : 2.5.

## Revendications

1. Procédé de fabrication d'un matériau de construction biologique pour pierre de construction, panneaux muraux ou plaques de plafonds, linteaux, enduit, mortier et équivalents, en utilisant de la chaux et du sable, dans lequel de la chaux éteinte est mélangée à de la terre contenant du sable, amenée ensuite dans la forme souhaitée et séchée, **caractérisé en ce que** l'on utilise en tant que terre contenant du sable de la terre végétale et **en ce que** pour le mélange, le rapport entre chaux éteinte et terre très sèche est sélectionné entre environ 1:1 et environ 1:3,5, et est en particulier égal à environ 1:2,5.

2. Procédé selon la revendication 1, **caractérisé en ce que** le séchage se fait de façon naturelle à l'air libre.

3. Procédé selon la revendication 1, **caractérisé en ce que** le séchage dure au moins dix jours, de préférence quelques semaines.

4. Procédé selon la revendication 1, **caractérisé en ce que** la terre contenant du sable est ajoutée sous une forme très sèche.

5. Procédé selon la revendication 1, **caractérisé en ce que** la terre contenant du sable contient au moins 50 % de sable, au maximum 85 % de sable, respectivement sur la base de la masse sèche.

6. Procédé selon la revendication 1, **caractérisé en ce que** le mélange de la chaux éteinte avec la terre se fait en ajoutant de l'eau.

7. Procédé selon la revendication 1, **caractérisé en ce que** la fraction de terre est sélectionnée pour être supérieure à la fraction de chaux éteinte.

8. Procédé selon la revendication 1, **caractérisé en ce que** le rapport entre terre extrême sèche et eau est sélectionné entre environ 20:1 et environ 2:1, en particulier entre environ 10:1 1 et environ 3:1.

9. Procédé selon la revendication 1, **caractérisé en ce que** la chaux éteinte est fabriquée à partir de chaux en morceaux et d'eau selon un rapport compris entre environ 1:2 et environ 1:4.

10. Procédé selon la revendication 1, **caractérisé en ce que** l'extinction de la chaux dure au moins 12 heures, en particulier au moins 24 heures, de préférence plusieurs jours.

11. Matériau biologique pour pierre de construction, panneau mural ou plaque de plafond, linteau, enduit, mortier et équivalent, composé d'un mélange de chaux éteinte avec de la terre contenant du sable et éventuellement de l'eau, **caractérisé en ce que** la terre contenant du sable se compose de terre végétale, et **en ce que** pour le mélange, un rapport entre chaux éteinte et terre très sèche est compris entre environ 1:1 1 et 1:3,5, et est en particulier égal à 1:2,5.
